# EUROPEAN PATENT SPECIFICATION

(11) **EP 2 442 985 B1**
(45) Date of publication and mention of the grant of the patent: **15.05.2013**
(21) Application number: 10725467.4
(22) Date of filing: 16.06.2010
(51) Int. Cl.: B41M 1/10, B41M 1/14, C09D 11/02

(54) **PROCESS FOR GRAVURE PRINTING WITH A WATER-BASED INK**
,
PROCÉDÉ D'HÉLIOGRAVURE AVEC UNE ENCRE À BASE D'EAU

(30) Priority: 18.06.2009 US 218174 P
(43) Date of publication of application: 25.04.2012
(73) Proprietor: Sun Chemical B.V., 1382 LV Weesp (NL)
(72) Inventor: MONDEL, Axel, 64521 Groß-Gerau (DE); THAI, Quang-Minh, 63500 Seligenstadt (DE)
(74) Representative: Vossius & Partner
(86) International application number: PCT/EP2010/058451
(87) International publication number: WO 2010/146080

(56) References cited:
- US-A- 5 389 130
- US-A1- 2006 260 481

## Description

This invention relates to a process for gravure printing, especially to a gravure printing process with a water-based ink and an especially engraved cylinder. In addition, the invention relates to the use of a water-based ink and an especially engraved cylinder for avoiding waviness of printed paper.

Gravure printing is an intaglio printing process, i.e. the image areas are below the surface of the non-image areas. It is commonly chosen by publishers, advertisers, packaging buyers and converters as it can produce high quality multi-color printing on a variety of materials with high speed and medium to long print runs. Rotogravure printing is simply rotary intaglio printing on an engraved cylinder.

Traditionally, rotogravure for printing magazines, catalogues, advertisements etc. utilizes toluene-based inks. The toluene is subsequently recycled using a high energy steam consumption process in which toluene vapor is absorbed by charcoal and desorbed from the charcoal by steam. The replacement of one or more toluene-based inks within the 4-color set with water-based ink will reduce or eliminate the need for steam recycling of toluene - a process that is accompanied by high energy output and associated costs. For example, replacing toluene-based yellow with water-based yellow will save approximately 30-35% of recycling steam energy and the associated costs (toluene recovery cost). A typical average ink consumption on a 4-color print job utilizes 30-35% yellow of the total ink consumption. In this scenario, for example, the toluene recovery cost is approximately 0.40 €/kg. A total toluene volume of 3 million kg per year will give a saving of 0.40 €/kg x 3 million kg per year x 30% = 360,000 € per year if only the yellow ink is replaced by a water-based one. Replacing a complete set of toluene-based inks with deinkable water-based inks will supply the full saving of approximately 0.40 €/kg x 3 million kg per year =1.2 million € per year.

Water-based inks not only have an advantage with respect to costs but they also reduce the environmental and health impact which becomes more and more an issue in industry.

In WO 2008/017349 A1, a gravure printing ink is described which avoids the use of toluene by using an aliphatic hydrocarbon fluid comprising paraffinic molecules and naphthenic molecules.

A number of attempts have been made in the last about 20 years for providing water-based inks which are suitable for gravure printing.

US-A1-200610260481 discloses gravure printing processes using aqueous inks in combination with an engraved cylinder in which the cells have shapes corresponding to a pyramid with variable edge lengths

US-A-5 389 130 teaches water-based inks for gravure printing, however, this document makes no comment regarding the gravure cylinder employed.

For example, U.S. Patent No. 4,104,219 discloses an ink containing a polyalkyl acrylate binder dispersed in a homogenous, aqueous phase. U.S. Patent No. 4,543,102 describes a water-based ink composition containing up to 8% of a water miscible organic solvent such as an alcohol.

Water-based gravure printing ink formulations are also described in U.S. Patent Nos. 5,098,478; 4,954,556 and 5,389,130 wherein a substantial portion of solvent is replaced with water.

WO 95/02017 A2 discloses an aqueous printing ink suitable for flexographic or intaglio printing which comprises a specific synthetic anionic polymer binder.

Although the water-based inks overcome the disadvantage of VOC-based inks (VOC = volatile organic compounds) like toluene-based inks with respect to costs, environment and health, they usually suffer from print quality problems when used with traditionally engraved cylinder:
For instance, there is a bad lay in solid ink areas (mottling), i.e. the print in full-tone area is not homogenous and structure and unevenness can be observed.

Also, waviness of paper substrates is a problem due to the presence of a large amount of water in the inks; paper becomes wavy/rippled after printing and looks like a "washboard".

In addition, the drying speed is poor compared to the toluene-based inks and there is a bad keeping of the register in multi-color printing due to the dimension instability and the waviness of the printed paper.

Further, the water makes paper swell causing dimension instability (paper web becomes wider and longer during printing) and if the paper swell excides a limit, the paper web looses its tensile strength and breaks.

Also, ink build-up on the impression roller occurs, which leads to poor printability and ink lay and can consequently also cause a web break.

It was therefore the object of the present invention to overcome these drawbacks of water-based gravure printing inks. This object is achieved with the features of the claims.

The present inventors found out that gravure printing with water-based printing inks is possible without the above problems if an engraved cylinder is used which has cells having a stylus angle of the inversed pyramid in a range from 110° to 150° and having a shape corresponding to screen angle type 0, 1, 2, 3 or 4 according to the Hell nomenclature, or having a shape corresponding to screen angles 70/33°, 70/60°, 70/45°, 58/33°, or 100/33° according to the Ohio nomenclature.

Other aspects, features, and advantages will be apparent from the summary above, as well as from the description that follows, including the figures and the claims.
- Fig. 1: shows preferred stylus angles of the inversed pyramid of the cells of the engraved cylinder used according to the invention;
- Fig. 2: shows preferred shapes and angular configurations of the cell openings of the cells of the engraved cylinder used according to the invention;
- Fig. 3: shows, for 5 exemplary engraving cells, the theoretical rhomb shaped configuration of the engraving cells together with the actual shape of each cell, corresponding to the configurations shown in Fig. 2; and
- Fig. 4: shows an enlarged partial view of the surface of three different engraving cylinders having different angular configurations.

The ink to be used in the process of the invention is a water-based ink which contains 40 to 80 wt% of water based on the total ink composition, preferably 50 to 70 wt%, more preferably 55 to 65 wt%.

The colorant used in the inks is selected from organic or inorganic pigments; it is possible to use combinations of two or more pigments or combinations of at least one pigment and at least one dye.

The dyes include, but are not limited to, azo dyes, anthraquinone dyes, xanthene dyes, azine, dyes, combinations thereof and the like. Organic pigments may be one pigment or a combination of pigments, such as, for instance, C.I. (= Color Index) Pigment Yellow Numbers 1, 2, 3, 5, 12, 13, 14, 17, 55, 73, 74, 83, 126, 127, 174, 176; 180, 188 C.I. Pigment Red Numbers 2, 22, 23, 48:1, 48:2, 48:3, 49, 49:1, 49:2, 52, 53, 57, 57:1, 58:2, 63, 81, 81:1, 81:x, 81:y, 122, 146, 147, 166, 169, 170, 184, 238, 254, 266; C.I. Pigment Orange Numbers 5, 13, 16, 34, 36; 46, C.I. Pigment Blue Numbers 1, 2, 10, 14, 15 types (15, 15:1, 15:2, 15:3, 15:4, 15:6) 16, 27, 29, 56; 61, 62, 79, C.I. Pigment Violet Numbers 1, 2, 3, 23, 27; and/or C.I. Pigment Green Number 7.

A useful inorganic pigment may be one of the following non-limiting pigments: iron oxides, titanium dioxides, chromium oxides, ferric ammonium ferrocyanides, ferric oxide blacks, calcium carbonate, kaoline, talc, barium sulfate, pigment black number 7 and/or pigment white numbers 6 and 7.

Other organic and inorganic pigments and dyes can also be employed, as well as combinations that achieve the colors desired.

Suitable inks also include gold, silver and coppershade ones based on metal/metal blends (alloys) like finely-ground powders of aluminum, copper, zinc, gold, silver and bronze, as well as mica (natural or synthetic source pearlescent) based shades, fluorescent pigments and dyes, phosphorescent pigments and dyes, luminescent pigments, thermochromic pigments, photochromic pigments.

Commercially available pigment types that could be used alone or in combination include: Lumilux grade from Honeywell; Glowbug grades from Glowbug (luminescent); Iriodin grades from Merck (pearlescent); Stapa brone and aluminium power and paste grades from Eckhart and Nano glow grades from Nanochemitek/China.

The amount of the colorant in the ink to be used in the process of the present invention is from 5 to 35 wt% based on the total ink composition, preferably 5 to 25 wt%, more preferably 10 to 20 wt%; if one or more dye(s) is/are present in addition to one or more pigment(s) these ranges refer to the total amount of pigment(s) and dye(s).

Typically, a gravure printing ink also comprises a polymeric binder which is the "glue" holding the ink on the substrate. The binder can be single resin or a combination of resins. The amount of the binder preferably is 10 to 40 wt% based on the total ink composition, more preferably 15 to 35 wt%, even more preferably 20 to 30 wt%.

The binder is not particularly limited but any binder known to be useful for water-based inks can be used in the present invention. It is preferred that the binder comprises at least one water-soluble resin and/or at least one water-dispersible resin, particularly preferred is a combination of at least one water-soluble resin and at least one water-dispersible resin. If a combination of water-soluble resin(s) and water-dispersible resin(s) is used, the weight ratio thereof is preferably from 5:95 to 25:75. A resin is considered water-soluble within this invention if its acid number is higher than 35, and it is considered water-dispersible if its acid number is 35 or less; the acid number defines the number of mg KOH necessary for neutralizing I g resin.

Preferred binder resins are (meth)acrylic polymers or copolymers. In this connection the term "(meth)acrylic" is meant to refer to both acrylic units and methacrylic units, each being present in the free acid form, in salt form or as ester; it is to be understood that the term (meth)acrylic unit within this invention also encompasses substituted (meth)acrylic units.

In view of water-solubility it is preferred to neutralize the carboxylic acid groups e.g. with ammonia, monoethanol amine, methyldiethanol amine or another suitable amine.

Suitable comonomers for (meth)acrylic copolymers are for instance styrene optionally substituted (e.g. with C₁-C₆ alkyl like methyl or ethyl), butadiene and combinations thereof.

Suitable binder resins are commercially available from several suppliers e.g. under the trade names Joncryl, Morez, Carboset, Lucidene and Tecryl.

Nowadays, waste paper, which is a non-homogenous mix of diverse printed products, is collected and recycled. During recycling, the printed products go through a flotation process and the ink is removed or "deinked". In the flotation process, deinking starts with alkaline repulping. Chemicals like caustic soda, peroxide, sodium silicate, soap and other collectors are used for the defibration and the releasing of ink from paper fibers. In contrast to offset and publication gravure inks, water-based inks are soluble in alkali water. The released ink particles are resolved and stay during the flotation process in water and result in grey fibers and process water.

According to one embodiment of the present invention, there is not only an improvement with respect to waviness of paper and print quality of solid areas but also an improvement with respect to the deinkability. For achieving this, polymer mixtures of
(1) finely dispersed, aqueous-basic insoluble emulsion (co)polymers (component 1) in intimate admixture with
(2) aqueous-basic soluble and/or dispersible (co)polymer compounds with lower molecular weights than that of (1) (component 2)
   are used as binders in an aqueous ink, wherein said polymer components (1) and (2) are characterized by their glass transition temperatures (T_{g}) as follows: T_{g} (1) is equal to or less than 0° C and T_{g} (2) is equal to or higher than 0°C, preferably higher than room temperature. Such binders are described in detail in US 5,932,629.

As the component (1), corresponding emulsion (co)polymer compounds having T_{g} values of -10°C or below are preferred, corresponding polymer compounds having significantly lower T_{g} values being of particular importance. As described in US 5,932,629, increasingly better deinking results can be achieved if emulsion (co)polymers with decreasing T_{g} values are employed as the binder component (1), wherein steps of, for example, -20°C, -25°C, -30°C, and -35°C down to -40°C may be mentioned. Optimum deinking results could be achieved, for instance, when employing aqueous inks according to the invention the polymer components (1) of which have T_{g} values ranging from -30°C to -35°C.

However, the components (2), which are characterized by being aqueous-basic soluble and/or dispersible polymer compounds (also referred to as solid resins in the following) and having a lower molecular weight than that of (1) are integral parts of the binder system of the aqueous inks according to the invention. Their glass transition temperature T_{g} (2) is basically distinct from the T_{g} of (1). As a lower limit for T_{g} (2), 0°C and in particular room temperature or above is required according to the invention. Preferably, T_{g} (2) is ranging at significantly higher values, especially at least 35°C, preferably 40 to 50°C or above. Particularly, interesting examples of this component (2) can have T_{g} (2) values ranging up to about 150°C and even above, if desired.

The mixing ratios of components (1) and (2) in the polymeric binder composition according to the invention may be varied in a relatively wide range. Naturally, optimization of the respective mixing ratios for the respective selected type of resin, with respect to both the water-insoluble component (1) and the water-soluble or water-dispersible component (2), considering their interaction is possible and usually necessary. Generally, a range of from 9:1 to 1:2 may be suitable for the mixing ratio of components (1) to components (2). Preferably mixing ratios in the range of from about 4:1 to 1:1.5 are used while it may be particularly convenient to use mixing ratios in the range of from 3:1 to 1:1. It can be seen from those ranges that the emulsion (co)polymer (1) with its low Tg values generally represents the prevailing polymer component in the binder composition, although ratios involving about equal amounts of components (1) and (2) also fall in preferred ranges. In particular cases, however, according to the figures specified above, the relatively hard component (2) may also be the prevailing component of the binder composition.

Usually, the water-insoluble emulsion (co)polymers (1) have average molecular weights (number average Mₙ) in the range of from about 10⁴ to 10⁶. The range of from about 5x10⁴ to 5x10⁵ may be of particular importance. As the starting monomers or monomer mixtures for the preparation of this binder component, the preferred embodiment at least predominantly uses such monomer types which will result in the low T_{g} values required herein. As important monomer components for the preparation of such component(s) (1), there may be mentioned in particular esters of olefinically unsaturated carboxylic acids, especially of corresponding lower α,β-unsaturated carboxylic acids, with straight and/or branched chain alcohols of higher chain lengths. Particularly suitable olefinically unsaturated carboxylic acids are acrylic and/or methacrylic acids, or dicarboxylic acids, such as maleic acid or maleic anhydride and/or fumaric acid. Suitable alcohols contain, for instance, up to 20 carbon atoms and in particular 3 to 15 carbon atoms. Particularly important examples of such ester-forming alcohols are straight and/or branched chain monohydric alcohols containing from 4 to 10 carbon atoms. The polymer can be in the form of selected homopolymers, but preferably in the form of copolymers. When n-butyl acrylate, i-butyl acrylate and/or 2-ethylhexyl acrylate are used, for instance, the desired lower T_{g} values in the range of, for instance, -20 to -35°C, can be adjusted in the (co)polymer formed. The concomitant use of minor amounts of comonomers which as such will result in relatively high T_{g} values in the copolymer formed is possible and may even be preferred. The control of undesirable adhesiveness may thus be achieved, for instance.

In the most important embodiments, the aqueous-basic soluble components (2) stabilizing the emulsion state are characterized by average molecular weights (number average Mₙ) in the range of from about 500 to 20,000 and preferably in the range of from about 1,000 to 10.000. Particularly important solid resins of this kind have respective average molecular weights in the range of from about 1,000 to 6,000.

The selection of the monomers or monomer mixtures for the preparation of components (2) is determined by the higher T_{g} values required for this component. In addition, sufficient solubility of this polymer component under aqueous-basic conditions is to be ensured. By a suitable per se known selection of the monomers or monomer mixtures for this component (2), considerable control of the material properties of this binder component is possible. Useful olefinically unsaturated acids are in particular corresponding lower α,β-olefinically unsaturated acids, such as acrylic and/or methacrylic acids, but again also corresponding olefinically unsaturated dicarboxylic acids, especially maleic acid or maleic acid anhydride and/or fumaric acid. As comonomers, compounds are used of a type known to result in the desired high T_{g} values in the polymer state, particularly in the range of from about 40 to 150°C. Examples thereof are the alkyl esters, already mentioned, of lower acids of the type (meth)acrylic acid, but also, in particular, monovinylidene aromatics, such as styrene and styrene derivatives, for example, α-methylstyrene. Examples of suitable alkyl esters are the corresponding methyl esters, but the concomitant use of other alcohol residues is also possible with appropriate control of the T_{g} values. Thus, for instance, with the concomitant use of 2-ethylhexyl acrylate, as a comonomer, solid resins having T_{g} values in the range of from 35 to 60°C can also be prepared as component (2).

The preparation of the water-based binder systems for the printing inks preferably used in the present invention is conveniently performed such that the components (2) are prepared in a separate step and dissolved with a water-soluble base, e.g. ammonia. Then, the emulsion (co)polymerization of the monomers or monomer mixtures of component (1) is performed during at least part of the period of the emulsion (co)polymerization in the aqueous-basic solution of the solid resin (2). For details, reference is made to EP-A-2 257 567.

An especially preferred ink resulting in good deinkability comprises - besides a colorant like a pigment - from about 10 to 40% by weight, preferably from about 15 to 35 wt%, more preferably 20 to 30% by weight, of the binder system described above consisting of the polymer components (1) and (2) with their different Tg values;
from about 40 to 80% by weight of water, preferably from about 50 to 70 wt%, more preferably 55 to 65 wt% of water;
from 0 to about 5% by weight, preferably 0 to less than 1 wt% of one or more organic solvents, and
from 0 to 10% by weight of other additives, for example, emulsifiers, solubilizing agents and the like, wherein all % by weight are based on the weight of the total ink composition.

Optionally, the ink to be used in the process of the present invention comprises suitable additives:
Extenders such as china clay and precipitated calcium carbonate may be used in the gravure ink formulations used in the present invention. Extenders help control gloss levels and improve the lay characteristics in ink formulations having high binder/pigment ratios. Due to their low costs, extenders can be used to effectively cheapen the cost of gravure inks. For example, fillers (like calcium carbonate, barium sulphate, kaoline, talc) can be used in gravure inks in an amount from 0 to 15 wt% based on the total ink composition to assist tack reduction and control color strength.

Rewetting agents can be employed in the gravure ink formulations used in the present invention to reduce screening which occurs when the ink in a cell of a second color combines with the dried ink of a first color. An example for a rewetting agent suitable for use in the present invention is a hydroxyethyl ethylene urea.

The water-based gravure ink used in the present invention may optionally contain other conventional additives, the effects of which must be evaluated, and if necessary, compensated for in the printing process. These adjuvants will include plasticizers (0 to 5 wt% based on the total ink composition) such as sucrose acetate, isobutyrate, triethyl citrate, and defoaming agents (preferred amount 0 to 5 wt%), antioxidants (preferred amount 0 to 2 wt%), corrosion inhibitors (preferred amount 0 to 3 wt%), biocides (preferred amount 0 to I wt%) and deodorants (preferred amount 0 to 1 wt%). Ammonia or other volatile amines (preferred amount 0 to 5 wt%) may also be added in trace amounts to aid in dissolving the resin. Each of the wt% above are based on the total ink composition.

Surfactants can also be used in gravure printing inks. In a particularly preferred embodiment of the present invention, up to 5 wt% based on the total ink composition of at least one nonionic surfactant and/or anionic surfactant is used to reduce surface tension and stabilize the pigment resin dispersions. Suitable surfactants include, for example, acetylenic glyerols, ethoxylated glycols and sorbitan esters.

It is also well known in the art to incorporate miscellaneous additives into the ink composition to enhance performance with regard to gloss, rub resistance, uniform density of the print flexibility and adhesion. Further, up to 1 wt% (based on the total ink composition) slip aids on silica basis and/or 0-2 wt% waxes such as polyethylene waxes, halogenated hydrocarbon waxes, and fatty acid amides can be used if desired.

The ink can also contain small amounts (preferably 0 to 5 wt%, more preferably less than 1 wt% based on the total ink composition) of organic solvents if desired; suitable examples of organic solvents are glycerol ethylene glycols, propylene glycols, ethylene-propylene glycols and mixtures thereof.

The total amount of additives in the ink is preferably less than 10 wt% based on the total ink composition.

The viscosity requirements of gravure inks dramatically distinguish them from paste-like inks, such as lithographic inks. Ink viscosity must be adjusted to meet several critical factors. Too high a viscosity results in an inadequate flow of ink from the cells of the cylinder and causes a phenomenon commonly known as "screening". Too low a viscosity results in a "slur-out" or "halo" occurring on the trailing edge of the print, appearing as a thin film of ink printing beyond the limits of the design. With this in mind, the final strength and shade adjustments to a gravure ink should be made when the proper viscosity and printing speed have been determined. The viscosity of the gravure ink used in the process of the present invention can, for instance, be measured by the efflux cup procedure which records the amount of time a specific amount of ink flow through a small hole (orifice); the thinner the ink, the faster it empties from the afflux cup, and the shorter the time required - the system expresses viscosity in seconds. If a GS cup (GS = Gebrüder Schmidt) with a 3 mm opening is used, a gravure ink usually results in a range of 20 to 40 seconds, preferably 25 to 32 seconds and more preferably 27 to 32 seconds when the measurement is carried out at 20°C.

The different substrates that could be utilized in the inventive printing process include but are not limited to paper grades known as LWC (light weight coated), MFC (machine finished coated), SC - A+/SC-A/SC-B (super calendared), improved news paper grades and news print paper grades as well as any matt paper grade. In addition, any other substrates which could be used in gravure printing such as but not limited to coated paper, heavy-coated paper and others could be utilized in the present inventive process.

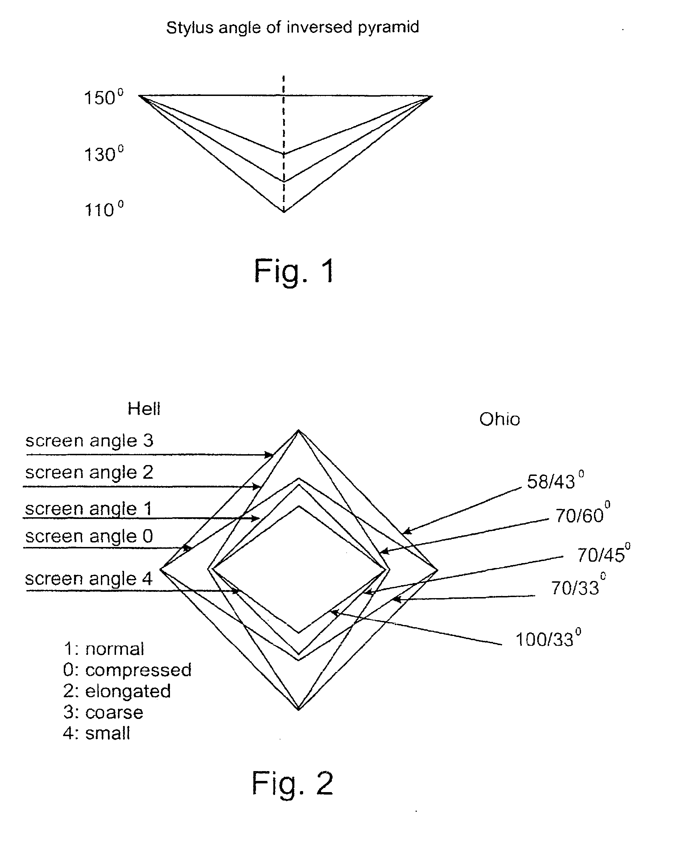

The engraved cylinder used according to the invention comprises cells as generally known in the field. For example the cells have a shape of an inversed or inverted pyramid. However, according to the invention, the cells have a stylus angle of the inversed pyramid in a range from 110° to 150° (see Fig. 1). Furthermore, the cells have a shape corresponding to screen angle type 0, 1, 2, 3 or 4 according to the Hell nomenclature wherein angle 1=normal, angle 0 =compressed, angle 2=elongated, angle 3=large or coarse, and angle 4=fine or small (i.e. according to using a Hell engraving machine), or have a shape corresponding to screen angles 70/33°, 70/60°, 70/45°, 58/43°, or 100/33° according to the Ohio nomenclature (i.e. according to using a Ohio engraving machine). This is shown in Fig. 2.

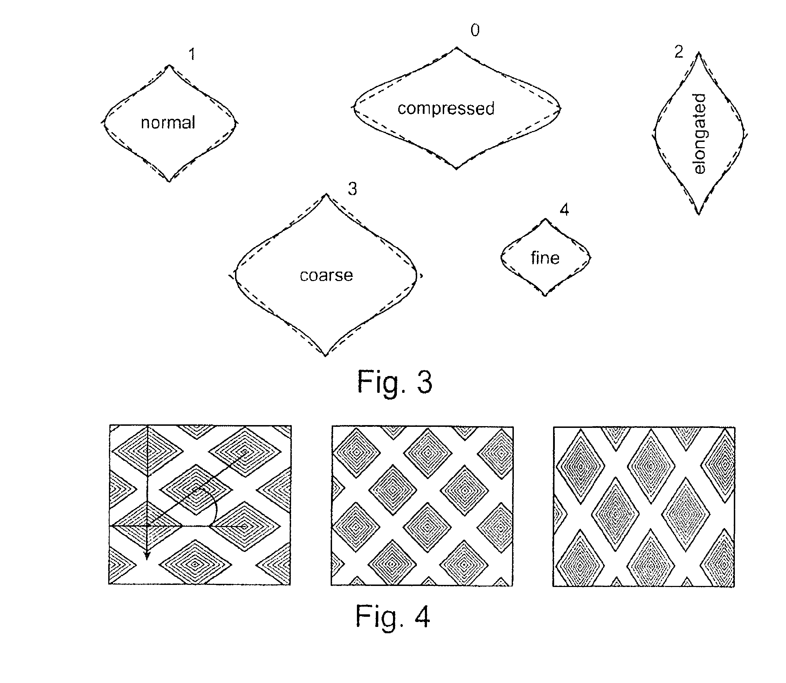

Fig. 3 again shows the different angular configurations of Fig. 2. The exact rhombic shapes of the cells as shown in Fig. 2 and also shown with broken lines in Fig. 3 are in fact only theoretically obtainable. In fact, if viewed with 80 times magnification as shown in Fig. 3, the edges of the actual cells are somehow rounded. The exact shapes shown in Fig. 2 are the best-fit configurations with respect to the actual rounded shapes (continuous lines) shown in Fig. 3.

Fig. 4 shows three different exemplary partial views of cylinder surfaces. The view to the left shows the configuration and arrangement of cells having a screen angle 0 according to Hell nomenclature, i.e., are "compressed" as shown in Fig. 3. The center view shows cell having a screen angle 1 according to Hell nomenclature, and the view to the right has cells according to screen angle 2, i.e. "elongated" cells.

Preferably, the cells have a stylus angle of the inversed pyramid in a range from 120° to 140°. more preferably of 130° to 140°, most preferably of 130°.

The screen angle is preferably type 0, 1, 2 or 4, most preferably type 4.

According to a preferred embodiment of the invention, the engraved cylinder has cells having a stylus angle of the inversed pyramid of 130° and having a shape corresponding to screen angle type 4 according to the Hell nomenclature, or having a shape corresponding to screen angles 100/33° according to the Ohio nomenclature.

According to another preferred embodiment of the invention, the engraved cylinder has cells having a stylus angle of the inversed pyramid of 140° and having a shape corresponding to screen angle type 4 according to the Hell nomenclature (corresponding to 100/33° in the Ohio nomenclature).

According to an alternative embodiment, the engraved cylinder has cells having a stylus angle of the inversed pyramid of 140° and having a shape corresponding to screen angle type 0, 1, or 2 according to the Hell nomenclature, or having a shape corresponding to screen angles 70/33°, 70/45°, or 70/60° according to the Ohio nomenclature.

According to another embodiment, the cells have a stylus angle of 130° and a shape corresponding to screen angle type 0, 1 or 2 (Hell nomenclature) and screen angles 70/33°, 70/45° or 70/60° (Ohio nomenclature), respectively.

The inversed pyramid of the cells of the engraved cylinder preferably has a quadrangular base shape.

The inventors realised that for water-based gravure printing ink the specific size and shape of the individual cells is of importance. Thus, the inventors found a shape and size combination as described above that on the one hand offers an amount of ink being small enough to obtain a sufficient drying speed but at the same time large enough to obtain the desired color density. The embodiment having a stylus angle of 130° and a screen size type 4 is particularly advantageous according to the invention. Although a screen size type 4 is commonly considered as offering too little amount of ink and thus is commonly used for black ink only, the inventors realised that particularly for water-based gravure ink such screen size type 4 is sufficient in combination with a stylus angle of 130°.

The process of the present invention can be used for single color printing but also for 4-color prints. If more than one color is printed at least one ink is a water based ink as defined above; from an economical point of view it is preferred that at least the yellow ink is such a water based ink. A water based ink (preferably a yellow ink) as defined above can be combined with conventional solvent based inks of other colors. According to one embodiment for 4-color prints the yellow ink is a water based ink as defined above and the cyan ink, magenta ink and black ink are toluene based inks.

In 4-color prints usually different screen angles are used for the 4 colored inks in order to avoid moire effect.

For toluene based inks engraved cylinders are used which commonly show the following screen angles:

| | |
|---|---|
| yellow ink | angle 3 (coarse) |
| magenta ink | angle 2 (elongated) or 0 (compressed) |
| cyan ink | angle 0 (compressed) or 2 (elongated) |
| black ink | angle 4 (fine) |

The stylus angle for printing toluene based inks is usually 130°.

According to a preferred embodiment of 4-color print of the present invention the yellow ink is a water based ink and it is printed with a screen angle of 4; the magenta ink, cyan ink and black ink can be toluene based inks printed with the above shown screen angles. In this preferred embodiment, the stylus angle is 130° for the toluene based inks and 130° or 140° for the water based ink; it is particularly preferred in this embodiment that all colors are printed with a stylus angle of 130°.

According to another embodiment, of 4-color print of the present invention a water based yellow ink is printed with a screen angle of 4, a water based cyan ink is printed with an angle of I or 2 and the magenta and black inks are toluene based inks printed with the angles shown above for toluene based inks. In this embodiment, the stylus angle is 130° for the toluene based inks and 130° or 140° for the water based inks.

According to still another embodiment of 4-color print of the present invention a water based yellow ink is printed with an angle of 4, a water based black ink is printed with an angle of 4 and the cyan and magenta inks are toluene based inks printed with the angles shown above for toluene based inks. In this embodiment, the stylus angle is 130° for the toluene based inks and 130° or 140° for the water based inks.

In 4-color prints the order of printed colors is usually as follows: yellow-magenta-cyan-black. This order can also be used for printing processes according to the present invention.

If the yellow ink is a water based ink which is printed with a screen angle of 4 and the other three colors are printed with toluene based inks the standard drying conditions of toluene based 4-color printing can be used; the printing speed can be up to 900 m/min (as commonly known the printing speed depends on the type of press, the paper used and the kind of desired printed product).

If two or more colors are printed with water based inks the commonly lower drying speed of water based inks can be compensated by optimizing the conditions of the steam-moisturing unit which is within the common knowledge of those skilled in the art.

Since less steam is required in case of water-based inks (compared to toluene based inks) for maintaining the desired moisture content of the paper web this is an advantage of water based inks with respect to costs. The controlling of the steam conditions in the steam moisturing unit is, however, much easier if cells with a stylus angle according to the present invention are used for printing the water based inks.

The gravur printing process of the present invention can be used for printing publications, magazines, catalogues, inserts printing and the like.

### Examples

Examples 1-4 below are drawn to water-based yellow inks, but it is understood that other water-based colors (magenta, cyan, black) can be formulated similar to yellow by replacing yellow concentrate with magenta, blue or black concentrate.

| **EXAMPLE 1** | |
|---|---|
| **Material** | **%** |
| Flexiverse YFD 1303 Yellow concentrate (PY 13, styrene-acrylic resin) (water content 55 wt%) | 30.0 |
| Joncryl 89 Styrene-Acrylic dispersion (BASF) (water content 44 wt%) | 42.0 |
| J679 Varnish (Styrene-Acrylic resin varnish)(water content 70 wt%) | 10.0 |
| Surfynol 104 Defoamer (Air Product) | 1.0 |
| Water | 17.0 |
| **Total** | **100.0** |

| **EXAMPLE 2** | |
|---|---|
| **Material** | **%** |
| Flexiverse YFD 1303 Yellow concentrate (PY 13, styrene-acrylic resin) (water content 55 wt%) | 30.0 |
| Lucidene 602 (Styrene-Acrylic dispersion) (water content 57 wt%) | 59.0 |
| Surfynol 104 Defoamer (Air Product) | 1.0 |
| Water | 10.0 |
| **Total** | **100.0** |

| **EXAMPLE 3** | |
|---|---|
| **Material** | **%** |
| Flexiverse YFD 1303 Yellow concentrate (PY 13, styrene-acrylic resin) (water content 55 wt%) | 30.0 |
| Flexiverse Red (Red concentrate PR 57:1) (water content 55 wt%) | 0.1 |
| Lucidene 605 (Styrene-Acrylic dispersion) (water content 52 wt%) | 52.0 |
| Surfynol 440 (Surfactant) | 0.5 |
| Surfynol 104 Defoamer (Air Product) | 1.0 |
| Water | 16.4 |
| **Total** | **100.0** |

| **EXAMPLE 4** | |
|---|---|
| **Material** | **%** |
| Flexiverse YFD 1303 Yellow concentrate (PY 13, styrene-acrylic resin) (water content 55 wt%) | 30.0 |
| Flexiverse Red (Red concentrate PR 57:1) (water content 55 wt%) | 0.1 |
| Lucidene 602 (Styrene-Acrylic dispersion) (water content 57 wt%) | 40.0 |
| Lucidene 605 (Styrene-Acrylic dispersion) (water content 52 wt%) | 15.0 |
| Surfynol 440 (Surfactant) | 0.5 |
| Surfynol 104 Defoamer (Air Product) | 1.0 |
| Water | 13.4 |
| **Total** | **100.0** |

The yellow printing inks of Examples 1-4 were printed on LWC paper in conjunction with toluene-based magenta, cyan and black inks.

The following screen angles (Hell nomenclature) were used:
yellow ink: 4 (fine)
magenta ink: 2 (elongated)
cyan ink: 0 (compressed)
black ink: 4 (fine)

The stylus angle of the inversed pyramid was 130° for each color.

The deinking results (IE₇₀₀) and luminosity (Y) are summarized in the table below together with the binder (polymer) type used and the glass transition temperature T_{g} (1) and T_{g} (2).

| **Example** | **Polymer (letdown dispersion)** | **IE₇₀₀ %** | **Y %** | **T_{g} (1) °C** | **T_{g} (2) °C** |
|---|---|---|---|---|---|
| 1 | Joncryl 89 | 40.5 | 57.6 | - | 110 |
| | Joncryl 679 | | | 70 | 140 |
| 2 | Lucidene 602 | 35.3 | 56.1 | 39 | |
| 3 | Lucidene 605 | 85.4 | 72.1 | -25 | 145 |
| 4 | Lucidene 602 | 82.9 | 69.3 | 39 | 140 |
| | Lucidene 605 | | | -25 | |
| All toluene inks used | | 80.7 | 70.5 | - | - |

The following test methods were used to produce the date above:
➢ Method 11 "Assessment of Print Product Recyclability - Deinkability Test" from Ingede (international association of the deinking industry) was applied for the deinking tests.
➢ The IE₇₀₀ = ink elimination was calculated by R ∞-values of filer pads of deinked, non-deinked pulp and unprinted paper using the formula in Ingede-Method 2 "Measurement of Optical Characteristics of Deinked Pulp".
> The luminosity (Y-value): measurement according to DIN 53140. The Y-value is the luminous reflectance for the sample. Y is sometimes used to quantify the brightness of an object, in this case the paper. The higher Y, the brighter the paper.
➢ T_{g} = glass transition temperature was measured according to DIN 51006 "Thermische Analyse" and DIN 63765 "Thennische Analyse von Polymeren". Most of the examined samples showed two T_{g} values: T_{g}(1) = low value; and T_{g} (2): high value.

The 4-color print did not show any mis-register and no waviness of the printed paper.

The same results were obtained when the water-based yellow ink was printed with screen angle type 4 and a stylus angle of 140°.

As is apparent from the above examples, the process of the present invention provides the following advantages:
By the use of water-based inks, the solvent emissions are reduced or eliminated, the toluene volume is reduced, the loss of toluene is reduced, the energy and costs associated with the recovery of organic solvents (like toluene) are reduced/eliminated and finally the environmental aspect is improved.

By the use of the specifically engraved cylinder, a good print-out in solid ink areas is obtained, while there are no problems with waviness of paper and bad register as well as web break.

## Claims

1. Gravure printing process, **characterized in** the use of
(a) a water-based gravure printing ink composition comprising 5 to 35 wt.% colorant based on the total composition and 40 to 80wt% water based on the total composition
and
(b) an engraved cylinder with cells having a stylus angle of the inversed pyramid in a range from 110° to 150° and having a shape corresponding to screen angle type 0, 1,2, 3 or 4 according to the Hell nomenclature, or having a shape corresponding to screen angles 70/33°, 70/60°, 70/45°, 58/33°, or 100/33° according to the Ohio nomenclature.

2. Process according to claim 1, wherein the colorant is a yellow pigment.

3. Process according to claim 1 or 2, wherein the ink composition further comprises as binder a polymer mixture of
(1) one or more finely dispersed, aqueous-basic insoluble emulsion (co)polymers (component 1) in intimate admixture with
(2) one or more aqueous-basic soluble and/or dispersible (co)polymer compounds
with lower molecular weights than that of (1) (component 2) said polymer components (1) and (2) being **characterized by** their glass transition temperatures (T_{g}) as follows: T_{g} (1) is equal to or less than 0° C and T_{g} (2) is equal to or higher than 0°C.

4. Process according to any one of claims 1 to 3, wherein the ink composition additionally comprises one or more additives selected from surfactants, antifoam agents, stabilizers, fillers, plasticizers, waxes, neutralizing agents, dispersing agents, levelling aids and slip aids.

5. Process according to any of the preceding claims, wherein the engraved cylinder has cells having a stylus angle of the inversed pyramid in a range from 120° to 140°.

6. Process according to any of the preceding claims, wherein the engraved cylinder has cells having a stylus angle of the inversed pyramid of 130°.

7. Process according to any of the preceding claims, wherein the engraved cylinder has cells having a shape corresponding to screen angle type 4 according to the Hell nomenclature, or having a shape corresponding to screen angles 100/33° according to the Ohio nomenclature.

8. Process according to any of the preceding claims, wherein the engraved cylinder has cells having a stylus angle of the inversed pyramid of 130° and having a shape corresponding to screen angle type 4 according to the Hell nomenclature, or having a shape corresponding to screen angles 100/33° according to the Ohio nomenclature.

9. Process according to any of claims 1 to 5, wherein the engraved cylinder has cells having a stylus angle of the inversed pyramid of 140° and having a shape corresponding to screen angle type 0, 1, or 2 according to the Hell nomenclature, or having a shape corresponding to screen angles 70/33°, 70/45°, or 70/60° according to the Ohio nomenclature.

10. Process according to any of the preceding claims, wherein the inversed pyramid of the cells of the engraved cylinder has a quadrangular base shape.

11. Process according to any of the preceding claims, which is a rotogravure process.

12. Process according to any of the preceding claims, which is a 4-color process wherein a water-based ink composition and an engraved cylinder as defined in claim 1 are used for printing at least one color.

13. Process according to claim 12, wherein the yellow ink is a water-based ink as defined in claim 1 and it is printed by using an engraved cylinder as defined in claim 1.

14. Process according to claim 13, wherein the yellow ink is printed by using an engraved cylinder having cell with a screen angle 4 according to Hell nomenclature and a stylus angle of 130°.

15. Process according to any of the preceding claims, wherein the substrate to be printed on is a paper.

16. Use of an engraved cylinder with cells having a stylus angle of the inversed pyramid in a range from 110° to 150° and having a shape corresponding to screen angle type 0, 1, 2, 3 or 4 according to the Hell nomenclature, or having a shape corresponding to screen angles 70/33°, 70/60°, 70/45°, 58/33°, or 100/33° according to the Ohio nomenclature, for gravure printing, wherein the ink printed with this cylinder is a water-based gravure printing ink composition comprising 5 to 35 wt% colorant based on the total composition and 40 to 80 wt% water based on the total composition.

17. Use of an engraved cylinder as defined in any of claims 1 and 5 to 10 with a water-based ink as defined in any of claims 1 to 4 for avoiding waviness of the printed paper.

18. Use of a gravure printing process according to any of claims 1 to 15 for avoiding waviness of the printed paper.

## Patentansprüche

1. Tiefdruckverfahren, **gekennzeichnet durch** die Verwendung von:
(a) einer Tiefdruck-Druckfarbenzusammensetzung auf Wasserbasis, die 5 bis 35 Gew.-% Farbmittel in Bezug auf die gesamte Zusammensetzung und 40 bis 80 Gew.-% Wasser in Bezug auf die gesamte Zusammensetzung umfasst,
und
(b) eines gravierten Zylinders mit Zellen mit einem Stichelwinkel der umgekehrten Pyramide in einem Bereich von 110° bis 150° und mit einer Form, die einem Rasterwinkeltyp 0, 1, 2, 3 oder 4 gemäß der Hell-Nomenklatur entspricht, oder mit einer Form, die Rasterwinkeln von 70/33°, 70/60°, 70/45°, 58/33° oder 100/33° gemäß der Ohio-Nomenklatur entspricht.

2. Verfahren nach Anspruch 1, wobei das Farbmittel ein Gelbpigment ist.

3. Verfahren nach Anspruch 1 oder 2, wobei die Druckfarbenzusammensetzung ferner ein Polymergemisch aus
(1) einem oder mehreren fein dispergierten, in alkalischem Wasser unlöslichen Emulsions(co)polymeren (Komponente 1) in einem innigen Gemisch mit
(2) einer oder mehreren in alkalischem Wasser löslichen und/oder dispergierbaren (Co)Polymerverbindungen mit geringeren Molekulargewichten als jene von (1) (Komponente 2)
als Bindemittel umfasst,
wobei die Polymerkomponenten (1) und (2) durch ihre Glasübergangstemperaturen (Tg) wie folgt gekennzeichnet sind: T_{g} (1) ist kleiner oder gleich 0 °C und T_{g} (2) ist größer oder gleich 0 °C.

4. Verfahren nach einem der Ansprüche 1 bis 3, wobei die Druckfarbenzusammensetzung darüber hinaus einen oder mehrere Zusatzstoffe aufweist, ausgewählt aus Tensiden, Antischaummitteln, Stabilisatoren, Füllstoffen, Weichmachern, Waxen, Neutralisierungsmitteln, Dispergiermitteln, Verlaufmitteln und Gleitmitteln.

5. Verfahren nach einem der vorstehenden Ansprüche, wobei der gravierte Zylinder Zellen mit einem Stichelwinkel der umgekehrten Pyramide in einem Bereich von 120° bis 140° aufweist.

6. Verfahren nach einem der vorstehenden Ansprüche, wobei der gravierte Zylinder Zellen mit einem Stichelwinkel der umgekehrten Pyramide von 130° aufweist.

7. Verfahren nach einem der vorstehenden Ansprüche, wobei der gravierte Zylinder Zellen mit einer Form aufweist, die einem Rasterwinkeltyp 4 gemäß der Hell-Nomenklatur entspricht, oder mit einer Form, die Rasterwinkeln von 100/33° gemäß der Ohio-Nomenklatur entspricht.

8. Verfahren nach einem der vorstehenden Ansprüche, wobei der gravierte Zylinder Zellen mit einem Stichelwinkel der umgekehrten Pyramide von 130 ° und mit einer Form aufweist, die einem Rasterwinkeltyp 4 gemäß der Hell-Nomenklatur entspricht, oder mit einer Form, die Rasterwinkeln von 100/33° gemäß der Ohio-Nomenklatur entspricht.

9. Verfahren nach einem der Ansprüche 1 bis 5, wobei der gravierte Zylinder Zellen mit einem Stichelwinkel der umgekehrten Pyramide von 140 ° und mit einer Form aufweist, die einem Rasterwinkeltyp 0, 1 oder 2 gemäß der Hell-Nomenklatur entspricht, oder mit einer Form, die Rasterwinkeln von 70/33°, 70/45° oder 70/60° gemäß der Ohio-Nomenklatur entspricht.

10. Verfahren nach einem der vorstehenden Ansprüche, wobei die umgekehrte Pyramide der Zellen des gravierten Zylinders eine viereckige Grundform aufweist.

11. Verfahren nach einem der vorstehenden Ansprüche, bei dem es sich um ein Rotationstiefdruckverfahren handelt.

12. Verfahren nach einem der vorstehenden Ansprüche, bei dem es sich um ein 4-Farben-Verfahren handelt, wobei eine Druckfarbenzusammensetzung auf Wasserbasis und ein gravierter Zylinder nach Anspruch 1 zum Drucken zumindest einer Farbe verwendet werden.

13. Verfahren nach Anspruch 12, wobei die gelbe Druckfarbe eine Druckfarbe auf Wasserbasis wie in Anspruch 1 definiert ist und mithilfe eines gravierten Zylinders wie in Anspruch 1 definiert gedruckt wird.

14. Verfahren nach Anspruch 13, wobei die gelbe Druckfarbe mithilfe eines gravierten Zylinders mit einer Zelle mit einem Rasterwinkel 4 gemäß der Hell-Nomenklatur und einem Stichelwinkel von 130° gedruckt wird.

15. Verfahren nach einem der vorstehenden Ansprüche, wobei das zu bedruckende Substrat ein Papier ist.

16. Verwendung eines gravierten Zylinders mit Zellen mit einem Stichelwinkel der umgekehrten Pyramide in einem Bereich von 110° bis 150° und mit einer Form, die einem Rasterwinkeltyp 0, 1, 2, 3 oder 4 gemäß der Hell-Nomenklatur entspricht, oder mit einer Form, die Rasterwinkeln von 70/33°, 70/60°, 70/45°, 58/33° oder 100/33° gemäß der Ohio-Nomenklatur entspricht, für den Tiefdruck, wobei die mit diesem Zylinder gedruckte Druckfarbe eine Tiefdruck-Druckfarbenzusammensetzung auf Wasserbasis ist, die 5 bis 35 Gew.-% Farbmittel in Bezug auf die gesamte Zusammensetzung und 40 bis 80 Gew.-% Wasser in Bezug auf die gesamte Zusammensetzung umfasst.

17. Verwendung eines wie in einem der Ansprüche 1 und 5 bis 10 definierten gravierten Zylinders mit einer wie in einem der Ansprüche 1 bis 4 definierten Druckfarbe auf Wasserbasis zum Vermeiden von Welligkeit des gedruckten Papiers.

18. Verwendung eines Tiefdruckverfahrens nach einem der Ansprüche 1 bis 15 zum Vermeiden von Welligkeit des gedruckten Papiers.

## Revendications

1. Procédé d'héliogravure, **caractérisé par** l'utilisation
(a) d'une composition d'encre d'héliogravure à base d'eau comprenant 5 à 35 pourcent en poids de colorant sur la base de la composition totale et 40 à 80 pourcent en poids d'eau sur la base de la composition totale
et
(b) d'un cylindre gravé comportant des alvéoles ayant un angle de pointe de la pyramide inversée dans une plage de 110° à 150° et ayant une forme correspondant au type d'angle de trame 0, 1, 2, 3 ou 4 selon la nomenclature de Hell, ou ayant une forme correspondant aux angles de trame 70/33°, 70/60°, 70/45°, 58/33° ou 100/33° selon la nomenclature d'Ohio.

2. Procédé selon la revendication 1, dans lequel le colorant est un pigment jaune.

3. Procédé selon la revendication 1 ou 2, dans lequel la composition d'encre comprend en outre, en tant que liant, un mélange de polymères
(1) d'un ou de plusieurs (co)polymères d'émulsion insoluble dans d'eau basique finement dispersés (composant 1) en mélange intime avec
(2) un ou plusieurs composés de (co)polymères dispersables et/ou solubles dans d'eau basique avec des poids moléculaires inférieurs à celui de (1) (composant 2), lesdits composants polymères (1) et (2) étant **caractérisés par** leurs températures de transition vitreuse (Tg) comme suit : T_{g} (1) est égal ou inférieur à 0 °C et T_{g} (2) est supérieur ou égal à 0 °C.

4. Procédé selon l'une quelconque des revendications 1 à 3, dans lequel la composition d'encre comprend en plus un ou plusieurs additifs sélectionnés parmi des agents de surface, des antimoussants, des stabilisateurs, des excipients, des plastifiants, des cires, des agents neutralisants, des agents dispersants, des aides à l'uniformisation et des aides au glissement.

5. Procédé selon l'une quelconque des revendications précédentes, dans lequel le cylindre gravé comporte des alvéoles ayant un angle de pointe de la pyramide inversée dans une plage de 120° à 140°.

6. Procédé selon l'une quelconque des revendications précédentes, dans lequel le cylindre gravé comporte des alvéoles ayant un angle de pointe de la pyramide inversée de 130°.

7. Procédé selon l'une quelconque des revendications précédentes, dans lequel le cylindre gravé comporte des alvéoles ayant une forme correspondant au type d'angle de trame 4 selon la nomenclature de Hell, ou ayant une forme correspondant aux angles de trame 100/33° selon la nomenclature d'Ohio.

8. Procédé selon l'une quelconque des revendications précédentes, dans lequel le cylindre gravé comporte des alvéoles ayant un angle de pointe de la pyramide inversée de 130° et ayant une forme correspondant au type d'angle de trame 4 selon la nomenclature de Hell, ou ayant une forme correspondant aux angles de trame 100/33° selon la nomenclature d'Ohio.

9. Procédé selon l'une quelconque des revendications 1 à 5, dans lequel le cylindre gravé comporte des alvéoles ayant un angle de pointe de la pyramide inversée de 140° et ayant une forme correspondant au type d'angle de trame 0, 1 ou 2 selon la nomenclature de Hell, ou ayant une forme correspondant aux angles de trame 70/33°, 70/45° ou 70/60° selon la nomenclature d'Ohio.

10. Procédé selon l'une quelconque des revendications précédentes, dans lequel la pyramide inversée des alvéoles du cylindre gravé a une forme de base quadrangulaire.

11. Procédé selon l'une quelconque des revendications précédentes, qui est un Procédé de rotogravure.

12. Procédé selon l'une quelconque des revendications précédentes, qui est un Procédé à 4 couleurs dans lequel une composition d'encre à base d'eau et un cylindre gravé selon la revendication 1 sont utilisés pour l'impression d'au moins une couleur.

13. Procédé selon la revendication 12, dans lequel l'encre jaune est une encre à base d'eau comme définie dans la revendication 1 et elle est imprimée en utilisant un cylindre gravé comme défini dans la revendication 1.

14. Procédé selon la revendication 13, dans lequel l'encre jaune est imprimée en utilisant un cylindre gravé comportant une alvéole avec un angle de trame 4 selon la nomenclature de Hell et un angle de pointe de 130°.

15. Procédé selon l'une quelconque des revendications précédentes, dans lequel le substrat sur lequel l'impression est effectuée est du papier.

16. Utilisation d'un cylindre gravé comportant des alvéoles ayant un angle de pointe de la pyramide inversée dans une plage de 110° à 150° et ayant une forme correspondant au type d'angle de trame 0, 1, 2, 3 ou 4 selon la nomenclature de Hell, ou ayant une forme correspondant aux angles de trame 70/33°, 70/60°, 70/45°, 58/33° ou 100/33° selon la nomenclature d'Ohio, pour une héliogravure, dans laquelle l'encre imprimée avec ce cylindre est une composition d'encre d'héliogravure à base d'eau comprenant 5 à 35 % en poids de colorant sur la base de la composition totale et 40 à 80 % en poids d'eau sur la base de la composition totale.

17. Utilisation d'un cylindre gravé comme défini dans l'une quelconque des revendications 1 et 5 à 10 avec une encre à base d'eau comme définie dans l'une quelconque des revendications 1 à 4 pour éviter une ondulation du papier imprimé.

18. Utilisation d'un Procédé d'héliogravure selon l'une quelconque des revendications 1 à 15 pour éviter une ondulation du papier imprimé.
